# EUROPÄISCHE PATENTSCHRIFT

(11) **EP 3 969 846 B1**
(45) Veröffentlichungstag und Bekanntmachung des Hinweises auf die Patenterteilung: **25.12.2024**
(21) Anmeldenummer: 20723336.2
(22) Anmeldetag: 29.04.2020
(51) Int. Cl.: G01C 21/32, B60W 30/12, G01C 21/00

(54) **VERFAHREN ZUM VALIDIEREN EINER KARTENAKTUALITÄT**
METHOD FOR VALIDATING A MAP ACTUALITY
MÉTHODE DE VALIDATION DE L'ACTUALITÉ D'UNE CARTE

(30) Priorität: 17.05.2019 DE 102019207218
(43) Veröffentlichungstag der Anmeldung: 23.03.2022
(73) Patentinhaber: Robert Bosch GmbH, 70442 Stuttgart (DE)
(72) Erfinder: SVENSSON, Anke, 38126 Braunschweig (DE); HASBERG, Carsten, 74360 Ilsfeld-Auenstein (DE); ABELING, Peter Christian, 30171 Hannover (DE); NASEER, Tayyab, London EC2A 3AH (GB)
(86) Internationale Anmeldenummer: PCT/EP2020/061885
(87) Internationale Veröffentlichungsnummer: WO 2020/233957

(56) Entgegenhaltungen:
- DE-A1- 102010 012 877
- DE-A1- 102017 211 613
- US-B1- 9 494 438

## Beschreibung

Die Erfindung betrifft ein Verfahren zum Validieren einer Aktualität mindestens einer digitalen Karte, insbesondere durch ein Steuergerät, ein Steuergerät, ein Computerprogramm sowie ein maschinenlesbares Speichermedium.

### Stand der Technik

Es sind bereits Verfahren zum crowd-basierten Kartieren von durch Fahrzeuge befahrbaren Straßen bekannt. Dabei werden Messdaten von Fahrzeugsensoren über eine Kommunikationsverbindung an einen Server übertragen. Auf dem Server werden die übertragenen Messdaten der Fahrzeugsensoren gesammelt und aus den Daten von mehreren Fahrzeugen Karten für relevante Straßenabschnitte generiert.

Derartige Karten können beispielsweise für automatisiertes Fahren eingesetzt werden, indem die automatisiert betreibbaren Fahrzeuge ihre Position innerhalb der Karte ermitteln und für eine automatisierte Navigation nutzen können. Eine derartige Lokalisierung von Fahrzeugen kann basierend auf Landmarken der Karte erfolgen.

Um eine hohe Genauigkeit und Zuverlässigkeit der Lokalisierung zu gewährleisten, müssen mögliche Veränderungen der befahrbaren Fahrzeugumgebung in der Karte frühzeitig und robust erkannt werden. Bisherige Verfahren zum Erkennen von derartigen Änderungen basieren auf Auswertungen von Satellitenbildern und sind mit einem erhöhten Aufwand verbunden.

DE 10 2017 211 613 A1 offenbart ein Verfahren zur Verifizierung von digitalen Karten für hochautomatisierte Fahrzeuge, bei dem sensorspezifische Einschränkungen vermieden werden. In einem Schritt wird eine Fahrzeugposition mittels GPS bestimmt und innerhalb einer Karte ermittelt. Anschließend wird zumindest eine Ist-Merkmalseigenschaft eines Merkmals in der Umgebung der Fahrzeugposition festgestellt und mit einer Soll-Merkmalseigenschaft des Merkmals verglichen, um Differenzwerte zu ermitteln. Weiterer Stand der Technik ist aus DE 10 2010 012 877 und US 9,494,438A1 B1 bekannt.

### Offenbarung der Erfindung

Die der Erfindung zugrunde liegende Aufgabe kann darin gesehen werden, ein Verfahren vorzuschlagen, welches technisch einfach Änderungen einer befahrbaren Fahrzeugumgebung gegenüber einer Karte erkennen kann.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt der Erfindung wird ein Verfahren zum Validieren einer Aktualität mindestens einer digitalen Karte bereitgestellt. Das Verfahren kann vorzugsweise durch ein fahrzeugseitiges und/oder fahrzeugexternes Steuergerät ausgeführt werden.

In einem Schritt wird mindestens eine digitale Karte empfangen oder aufgerufen. Es werden Messdaten über eine Fahrzeugumgebung empfangen. Die Messdaten werden insbesondere von einer Fahrzeugsensorik empfangen, welche Radarsensoren, LIDAR-Sensoren, GNSS-Sensoren, Kamerasensoren und dergleichen aufweisen kann.

Eine Fahrzeugposition wird innerhalb der mindestens einen digitalen Karte basierend auf Landmarken ermittelt. Hierzu können Landmarken aus den Messdaten der Fahrzeugsensoren extrahiert und innerhalb der mindestens einen digitalen Karte detektiert werden.

In einem weiteren Schritt werden Daten einer Fahrassistenzfunktion empfangen.

Hierbei kann beispielsweise eine Befahrbarkeit einer Fahrspur, ein Abstand zu Fahrspurmarkierungen, ein Abstand zu benachbarten Verkehrsteilnehmern und dergleichen durch das Steuergerät empfangen werden. Die Daten der Fahrassistenzfunktion können insbesondere ein Ergebnis der Fahrassistenzfunktion sein.

Zum Validieren der Aktualität der mindestens einen digitalen Karte wird ein Abgleich zwischen der Fahrzeugposition innerhalb der mindestens einen digitalen Karte und den Daten der Fahrassistenzfunktion durchgeführt. Dabei wird eine positive Validierung der Aktualität der Karte ermittelt, wenn sowohl die Fahrzeugposition in einer Lokalisierungskarte als auch die Daten der Fahrerassistenzfunktionen übereinstimmend eine befahrbare Position ermitteln.

Nach einem weiteren Aspekt der Erfindung wird ein Steuergerät bereitgestellt, wobei das Steuergerät dazu eingerichtet ist, das Verfahren auszuführen. Das Steuergerät kann beispielsweise ein fahrzeugexternes Steuergerät oder eine fahrzeugexterne Servereinheit, wie beispielsweise ein Cloud-System, sein. Das Steuergerät kann vorzugsweise Messdaten der Fahrzeugsensorik von mindestens einem Fahrzeug empfangen können. Alternativ oder zusätzlich kann das Steuergerät ein fahrzeuginternes Steuergerät sein, welches Messdaten der Fahrzeugsensoren empfangen und auswerten kann.

Darüber hinaus wird nach einem Aspekt der Erfindung ein Computerprogramm bereitgestellt, welches Befehle umfasst, die bei der Ausführung des Computerprogramms durch einen Computer oder ein Steuergerät diesen veranlassen, das erfindungsgemäße Verfahren auszuführen. Gemäß einem weiteren Aspekt der Erfindung wird ein maschinenlesbares Speichermedium bereitgestellt, auf dem das erfindungsgemäße Computerprogramm gespeichert ist.

Das Steuergerät kann beispielsweise in einem Fahrzeug eingebaut sein oder über eine Kommunikationsverbindung mit einem Fahrzeug kommunizieren können. Das Fahrzeug kann hierbei gemäß der BASt Norm assistiert, teilautomatisiert, hochautomatisiert und/oder vollautomatisiert bzw. fahrerlos betreibbar sein.

Die Fahrassistenzfunktion kann hierbei auf die Messdaten der Fahrzeugsensoren zugreifen oder eigene Sensoren zum Sammeln von Messdaten aufweisen. Als Fahrassistenzfunktion wird erfindungsgemäß ein Spurhalteassistent verwendet, es kann aber auch ein Notbremsassistent, Abstandshalteassistent und dergleichen verwendet werden. Durch das Verfahren kann eine Erkennung von Abweichungen bzw.

Unstimmigkeiten zwischen digitalen Karten und realen Fahrzeugumgebungen umgesetzt werden. Eine derartige Erkennung von Abweichungen durch Lokalisierungs- und/oder Planungskarten allein kann aufwändig sein, da diese Erkennung üblicherweise auf unsicheren Lokalisierungsschätzungen basiert. Das erfindungsgemäße Verfahren hingegen nutzt die fahrzeugseitige Lokalisierungsschätzung sowie Informationen aus Fahrerassistenzfunktionen und fusioniert diese, parallel vorliegenden, Daten miteinander, um Änderungen in Lokalisierungs- und/oder Planungskarten zu erkennen. Alternativ oder zusätzlich können die Karten auf Messdaten von LIDAR-Sensoren, Radarsensoren, Kamerasensoren und dergleichen basieren.

Es kann somit eine Validierung von einer sogenannten HAD-Kartenaktualität zum Zeitpunkt der Lokalisierung eines Fahrzeugs unter Verwendung von Fahrerassistenzfunktionen durchgeführt werden. Damit kann zum Zeitpunkt der Lokalisierung lokal in einem betrachteten Fahrzeug entschieden werden, ob ein Kartenupdate erforderlich ist.

Abhängig davon, ob die Validierung positiv oder negativ ausfällt, kann das Fahrzeug seine Fahrt fortsetzen oder darf sich nicht mehr auf die verwendete Karte verlassen. Bei einer negativen Validierung der Aktualität der mindestens einen Karte kann beispielsweise der automatisierte Fahrmodus beendet und eine Fahrzeugsteuerung an einen Fahrer übergeben werden.

Abhängig von dem Ergebnis der Validierung können im Rahmen des Verfahrens weitere Handlungen ausgeführt oder veranlasst werden. Zu derartigen Handlungen können beispielsweise ein Vermerken der Unstimmigkeit zwischen der Karte und der tatsächlichen Fahrzeugumgebung, ein Versenden eines Berichts über die gescheiterte Validierung, ein fahrzeugseitiges Einleiten einer Neukartierung, ein fahrzeugexternes Einleiten einer Neukartierung, ein Durchführen einer Kartenaktualisierung und dergleichen zählen. Insbesondere kann durch das Verfahren eine Aktualität einer digitalen Karte bestätigt oder eine mangelnde Aktualität der digitalen Karte festgestellt werden.

Durch das Verfahren kann die Qualität von digitalen Karten, insbesondere für automatisiertes Fahren, verbessert werden. Durch die gesteuerte Übertragung von Messdaten der Fahrzeugsensoren kann die Aktualisierung der digitalen Karten auf notwendige Bereiche reduziert werden. Dadurch kann die Kartenerstellung zielgerichtet beschleunigt werden und die Bereitstellungszeit aktueller Karten verringert werden. Darüber hinaus kann die Übertragung der zur Kartierung relevanten Informationen situationsabhängig gesteuert werden. Damit kann die Menge an zu übertragenen Daten verringert werden.

Darüber hinaus kann durch das erfindungsgemäße Verfahren die Zuverlässigkeit von HAD-Karten und damit auch die Vertrauenswürdigkeit der Lokalisierung gesteigert werden.

Nach einer Ausführungsform wird die Aktualität der digitalen Karte bestätigt, wenn die ermittelte Fahrzeugposition innerhalb der digitalen Karte mit den Daten der Fahrassistenzfunktion übereinstimmt. Hierdurch kann ein Konsens zwischen der digitalen Karte und der realen Fahrzeugumgebung festgestellt werden. Die mindestens eine digitale Karte kann erfolgreich validiert werden, wenn beispielsweise sowohl die Position in einer Lokalisierungskarte als auch die Ergebnisse der Fahrerassistenzfunktionen übereinstimmend eine befahrbare Position des Fahrzeugs ermitteln können. In einem derartigen Fall kann auch eine zur Lokalisierungskarte parallele Planungskarte bestätigt werden. Diese Information kann nun sowohl lokal bzw. fahrzeugintern als auch fahrzeugextern verwendet werden. Insbesondere kann die positive Validierung der digitalen Karte eine fahrzeuginterne onboard-Nutzung der digitalen Karte und/oder einen Datenupload auslösen.

Des Weiteren kann eine Datenmenge, welche durch das Steuergerät an eine externe Servereinheit übermittelt wird verringert werden, da eine Übertragung der Messdaten der Fahrzeugsensorik an die externe Servereinheit nur bei Bedarf bzw. bei einer negativen Validierung der mindestens einen digitalen Karte erfolgt.

Hierdurch kann auch der Umfang und die Häufigkeit einer derartigen Sensordatenübertragung reduziert werden. Somit kann eine Übertragung von Daten zwischen dem Steuergerät und der externen Servereinheit verhindert werden, wenn die digitale Karte noch korrekt ist und damit kein Kartenupdate erforderlich ist.

Gemäß einem weiteren Ausführungsbeispiel fällt die Validierung der Aktualität der digitalen Karte negativ aus, wenn eine Abweichung zwischen der ermittelten Fahrzeugposition innerhalb der digitalen Karte und den Daten der Fahrassistenzfunktion festgestellt wird. Hierdurch kann ein Dissens zwischen der mindestens einen digitalen Karte und der Fahrzeugumgebung festgestellt werden. Ein derartiger Fall tritt beispielsweise ein, wenn eine als Spurhalteassistent ausgeführte Fahrassistenzfunktion eine kontinuierliche Spurführung ermöglicht während ein Lokalisierungsdienst ein Verlassen der Fahrspur erkennt bzw. keine gültige Position ermitteln kann. Ein solcher Fall kann insbesondere in Baustellensituationen, beispielsweise bei Umleitung auf eine gegenüberliegende Fahrbahn oder auf einen Standstreifen, auftreten.

Wird ein derartiger Dissens durch das Steuergerät ermittelt, darf sich das Fahrzeug nicht mehr auf die digitale Karte verlassen, wodurch die Sicherheit eines automatisierten Fahrmodus des Fahrzeugs nicht mehr gewährleistet werden kann.

Wird eine Änderung einer als Lokalisierungskarte ausgestalteten digitalen Karte erkannt, kann daraus mit großer Wahrscheinlichkeit geschlussfolgert werden, dass sich eine Planungskarte für den gleichen Ort ebenfalls geändert hat und eine Neuerstellung für den relevanten Bereich erforderlich ist.

Gemäß einer weiteren Ausführungsform wird nach einem Feststellen einer Abweichung zwischen der ermittelten Fahrzeugposition innerhalb der digitalen Karte und den Daten der Fahrassistenzfunktion eine externe Servereinheit benachrichtigt. Hierdurch kann die externe Servereinheit, welche beispielsweise Messdaten von einer Vielzahl an Fahrzeugen empfängt und digitale Karten aus den Messdaten erstellt, benachrichtigt bzw. gewarnt werden.

Somit kann eine Neukartierung des relevanten Bereichs des Fahrzeugumfelds getriggert werden. Des Weiteren kann die Fahrzeugumgebung, welche nicht mehr korrekt in der digitalen Karte hinterlegt ist für alle Fahrzeuge als ungültig und/oder als nicht mehr aktuell markiert werden.

Nach einem weiteren Ausführungsbeispiel werden nach einem Feststellen einer Abweichung zwischen der ermittelten Fahrzeugposition innerhalb der digitalen Karte und den Daten der Fahrassistenzfunktion eine Kartenaktualisierung und/oder eine Neukartierung eingeleitet. Es kann somit eine Information über die festgestellte Abweichung über eine drahtlose Kommunikationsverbindung an die externe Servereinheit übertragen werden. Die externe Servereinheit kann basierend auf der übermittelten Information gezielt Messdaten von Fahrzeugen aus diesem Bereich beziehen und somit die nicht mehr aktuelle Stelle der digitalen Karte korrigieren. Hierdurch kann eine situationsabhängige Kartenaktualisierung durchgeführt werden, welche bei Bedarf einleitbar ist.

Gemäß einer weiteren Ausführungsform wird die Abweichung zwischen der ermittelten Fahrzeugposition innerhalb der digitalen Karte und den Daten der Fahrassistenzfunktion bewertet und/oder kategorisiert. Es kann hierdurch eine Schwere der Abweichung ermittelt werden. Die Schwere bzw. der Grad der Abweichung kann beispielsweise anhand einer Auswirkung auf Fahrzeuge und auf einen automatisierten Betriebsmodus durch das Steuergerät bestimmt werden. Insbesondere können Abweichungen, beispielsweise an Leitpfosten oder an einem Fahrbahnrand, als geringfügig eingestuft werden. Andere Abweichungen, wie beispielsweise geänderte Fahrspurführung, gesperrte Fahrspuren und dergleichen, können als schwerwiegend eingestuft werden. Durch eine derartige Kategorisierung der ermittelten Abweichungen kann die übertragene Datenmenge weiter gesenkt werden, da nur schwerwiegende Abweichungen an die externe Servereinheit gemeldet werden.

Nach einer weiteren Ausführungsform wird die festgestellte Abweichung in einem mit dem Steuergerät verbindbaren Speicher hinterlegt. Hierdurch können insbesondere die als geringfügig eingestuften Abweichungen vorerst fahrzeugintern vermerkt werden, da diese keinen direkten oder nur einen geringen Einfluss auf den Verkehr haben. Bei einem erneuten Passieren des Fahrzeugumfelds mit der als geringfügig eingestuften Abweichung zwischen der digitalen Karte und der Fahrzeugumgebung kann bei einem Fortbestehen der Abweichung eine Meldung durch das Steuergerät an die externe Servereinheit übermittelt werden. Hierdurch können geringfügige Abweichungen kontinuierlich beobachtet werden, wodurch Änderungen des Einflusses der Abweichung auf Fahrzeuge frühzeitig erkannt und bei der Kartenaktualisierung berücksichtigt werden können.

Im Folgenden werden anhand von stark vereinfachten schematischen Darstellungen bevorzugte Ausführungsbeispiele der Erfindung näher erläutert.

Hierbei zeigen
- Fig. 1: eine schematische Darstellung einer Fahrzeuganordnung zum Veranschaulichen eines Verfahrens gemäß einer Ausführungsform und
- Fig. 2: ein schematisches Ablaufdiagramm zum Veranschaulichen des Verfahrens.

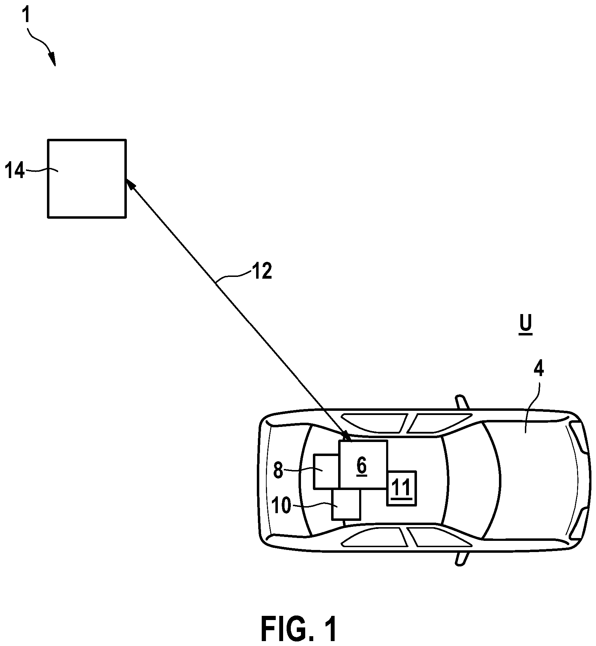

In der Figur 1 ist eine schematische Darstellung einer Fahrzeuganordnung 1 zum Veranschaulichen eines Verfahrens 2 gemäß einer Ausführungsform gezeigt. Die Fahrzeuganordnung 1 weist mindestens ein Fahrzeug 4 auf, welches entlang einer Fahrzeugumgebung U in einem automatisierten Fahrmodus fährt.

Das Fahrzeug 4 weist ein fahrzeuginternes Steuergerät 6 auf, welches dazu eingerichtet ist das Verfahren 2 auszuführen. Das Steuergerät 6 kann hierzu auf ein maschinenlesbares Speichermedium 8 zugreifen, auf welchem mindestens ein Computerprogramm gespeichert ist. Das Steuergerät 6 kann vorzugsweise das auf dem maschinenlesbaren Speichermedium 8 hinterlegte Computerprogramm ausführen.

Des Weiteren weist das Fahrzeug 4 eine Fahrzeugsensorik 10 auf. Die Fahrzeugsensorik 10 kann beispielsweise aus einem oder mehreren LIDAR-Sensoren, Radarsensoren, Kamerasensoren, GNSS-Sensoren und dergleichen bestehen. Insbesondere kann die Fahrzeugsensorik 10 Messdaten über die Fahrzeugumgebung U sammeln. Die ermittelten Messdaten können an das Steuergerät 6 übermittelt und durch das Steuergerät 6 ausgewertet werden.

Auf die Messdaten der Fahrzeugsensorik 10 kann auch eine Fahrassistenzfunktion 11 bzw. ein Fahrassistenzsystem des Fahrzeugs 4 zugreifen. Die Fahrassistenzfunktion 11 kann beispielsweise ein Spurhalteassistent sein, welcher Prüft, ob das Fahrzeug 4 sich innerhalb einer befahrbaren Fahrspur befindet. Die Fahrassistenzfunktion 11 kann beispielsweise Fahrbahnmarkierungen und/oder Fahrspurmarkierungen und/oder einen Fahrbahnbelag detektieren, um eine Befahrbarkeit der Fahrzeugumgebung U festzustellen.

Über eine Kommunikationsverbindung 12 kann das Steuergerät 6 Daten an eine externe Servereinheit 14 senden oder Daten von der externen Servereinheit 14 empfangen.

Beispielsweise kann das Steuergerät 6 digitale Karten und/oder Kartenaktualisierungen von der externen Servereinheit 14 empfangen. Des Weiteren kann das Steuergerät 6 die empfangenen Messdaten der Fahrzeugsensorik 10 an die externe Servereinheit 14 senden.

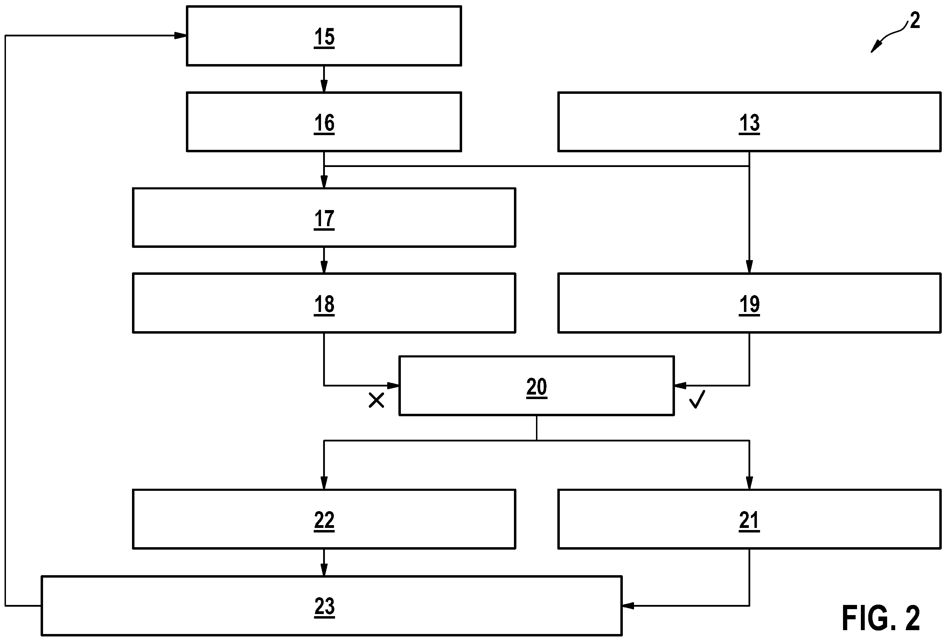

Die Figur 2 zeigt ein schematisches Ablaufdiagramm zum Veranschaulichen des Verfahrens 2.

In einem Schritt des Verfahrens 2 werden zunächst Messdaten der Fahrzeugsensorik 10 durch ein Kartierungsfahrzeug oder eine Kartierungsflotte erfasst und an einen Kartierungsservice 15 übermittelt. Das Fahrzeug 4 kann ebenfalls als ein Kartierungsfahrzeug ausgestaltet sein oder als solches verwendet werden.

Aus den empfangenen Messdaten kann beispielsweise die externe Servereinheit 14 Lokalisierungskarten erstellen 16. Die Lokalisierungskarte kann vorzugsweise als eine digitale Karte ausgeführt sein und Fahrzeugen zur Lokalisierung zur Verfügung gestellt werden.

Während des Fahrens wird durch einen Lokalisierungsservice die als Lokalisierungskarte ausgestaltete digitale Karte empfangen 17. Durch den Lokalisierungsservice wird kontinuierlich eine Position des Fahrzeugs 4 in der Lokalisierungskarte 18 bestimmt. Hierzu können neben der Lokalisierungskarte Messdaten der Fahrzeugsensorik 10 empfangen 13 und verwendet werden. Parallel zu der Ermittlung der Fahrzeugposition 18 erfolgt eine Situationsanalyse anhand von vorhandenen Fahrerassistenzfunktionen des Fahrzeugs 4. Beispielsweise können als solche Fahrassistenzfunktionen Spurhalteassistenten, Notbremsassistenten, Abstandshalteassistenten, Schilderkennungsassistenten und dergleichen genutzt werden. Basierend auf den Ergebnissen der Fahrerassistenzfunktion, kann das Fahrzeug 4 in einer Fahrspur geführt werden 19.

Nachfolgend werden beide Prozesse 18, 19 miteinander verglichen 20. Es kann hierbei ein Konsens bzw. eine positive Validierung der Aktualität der Karte ermittelt werden, wenn sowohl eine Fahrzeugposition in der Lokalisierungskarte als auch die Ergebnisse der Fahrerassistenzfunktionen übereinstimmend eine befahrbare Position ermitteln können. In diesem Fall wird die Planungskarte bestätigt 21.

Ein Dissens bzw. eine negative Validierung kann beispielsweise durch das Steuergerät 6 ermittelt werden, wenn der Spurhalteassistent eine kontinuierliche Spurführung ermöglicht während der Lokalisierungsdienst ein Verlassen der Fahrspur erkennt bzw. keine gültige Position ermitteln kann. Eine derartige Situation kann insbesondere in Baustellensituationen, wie beispielsweise bei Umleitung auf eine gegenüberliegende Fahrbahn, auftreten. Es kann eine Veränderung bzw. Abweichung der digitalen Karte erkannt werden 22. Diese Information kann nun ebenfalls lokal durch das Steuergerät 6 und/oder an einen sogenannten Mapping Service 15, beispielsweise der externen Servereinheit 14, übermittelt werden.

Nachdem die Ergebnisse der Situationsanalyse der Fahrassistenzfunktion bzw. eines Fahrassistenzsystems mit der Lokalisierungskarte fortlaufend verglichen werden, kann die Erkennung einer Übereinstimmung zum Beenden einer Update-Phase 23 dienen.

## Patentansprüche

1. Verfahren (2) zum Validieren einer Aktualität mindestens einer digitalen Karte, insbesondere durch ein Steuergerät (6), wobei
- die mindestens eine digitale Karte empfangen oder aufgerufen wird (17),
- Messdaten über eine Fahrzeugumgebung (U) von einer Fahrzeugsensorik empfangen werden (13),
- Landmarken aus den Messdaten extrahiert und innerhalb der mindestens einen digitalen Karte detektiert werden,
- eine Fahrzeugposition innerhalb der mindestens einen digitalen Karte basierend auf den detektierten Landmarken innerhalb der Fahrzeugumgebung (U) ermittelt wird (18),
- Daten einer Fahrassistenzfunktion (11) empfangen werden (19), wobei die Daten der Fahrerassistenzfunktion (11) Ergebnisse der Fahrerassistenzfunktion (11) sind, wobei als Fahrerassistenzfunktion (11) ein Spurhalteassistent verwendet wird,
- zum Validieren der Aktualität der mindestens einen digitalen Karte ein Abgleich zwischen der ermittelten Fahrzeugposition innerhalb der mindestens einen digitalen Karte und den Ergebnissen der Fahrassistenzfunktion (11) durchgeführt wird (20),
**dadurch gekennzeichnet, dass** eine positive Validierung der Aktualität der Karte ermittelt wird, wenn sowohl die Fahrzeugposition in der als Lokalisierungskarte ausgestalteten digitalen Karte als auch die Ergebnisse der Fahrerassistenzfunktionen übereinstimmend eine befahrbare Position ermitteln.

2. Verfahren nach Anspruch 1, wobei die Aktualität der digitalen Karte bestätigt wird (21), wenn die ermittelte Fahrzeugposition innerhalb der digitalen Karte mit den Daten der Fahrassistenzfunktion (11) übereinstimmt.

3. Verfahren nach Anspruch 1 oder 2, wobei die Validierung der Aktualität der digitalen Karte negativ ausfällt (22), wenn eine Abweichung zwischen der ermittelten Fahrzeugposition innerhalb der digitalen Karte und den Daten der Fahrassistenzfunktion (11) festgestellt wird.

4. Verfahren nach Anspruch 3, wobei nach einem Feststellen einer Abweichung zwischen der ermittelten Fahrzeugposition innerhalb der digitalen Karte und den Daten der Fahrassistenzfunktion (11) eine externe Servereinheit (14) über eine Kommunikationsverbindung (12) benachrichtigt wird.

5. Verfahren nach Anspruch 3 oder 4, wobei nach einem Feststellen einer Abweichung zwischen der ermittelten Fahrzeugposition innerhalb der digitalen Karte und den Daten der Fahrassistenzfunktion (11) eine Kartenaktualisierung und/oder eine Neukartierung eingeleitet werden.

6. Verfahren nach einem der Ansprüche 3 bis 5, wobei die Abweichung zwischen der ermittelten Fahrzeugposition innerhalb der digitalen Karte und den Daten der Fahrassistenzfunktion (11) bewertet und/oder kategorisiert wird.

7. Verfahren nach einem der Ansprüche 3 bis 6, wobei die festgestellte Abweichung in einem mit dem Steuergerät (6) verbindbaren Speicher (8) hinterlegt wird.

8. Steuergerät (6), wobei das Steuergerät (6) dazu eingerichtet ist, das Verfahren (2) gemäß einem der Ansprüche 1 bis 7 auszuführen.

9. Computerprogramm, welches Befehle umfasst, die bei der Ausführung des Computerprogramms durch einen Computer oder ein Steuergerät (6) diesen veranlassen, das Verfahren gemäß einem der Ansprüche 1 bis 7 auszuführen.

10. Maschinenlesbares Speichermedium (8), auf welchem das Computerprogramm gemäß Anspruch 9 gespeichert ist.

## Claims

1. Method (2) for validating an up-to-dateness of at least one digital map, in particular by means of a control unit (6), wherein
- the at least one digital map is received or retrieved (17),
- measurement data about vehicle surroundings (U) from a vehicle sensor system are received (13),
- landmarks are extracted from the measurement data and detected within the at least one digital map,
- a vehicle position within the at least one digital map is determined (18) on the basis of the detected landmarks within the vehicle surroundings (U),
- data of a driving assistance function (11) are received (19), wherein the data of the driver assistance function (11) are results of the driver assistance function (11), wherein a lane keeping assistant is used as the driver assistance function (11),
- in order to validate the up-to-dateness of the at least one digital map, a comparison between the determined vehicle position within the at least one digital map and the results of the driving assistance function (11) is carried out (20), **characterized in that** a positive validation of the up-to-dateness of the map is determined if both the vehicle position in the digital map configured as a localization map and the results of the driver assistance functions determine a navigable position in a corresponding manner.

2. Method according to Claim 1, wherein the up-to-dateness of the digital map is confirmed (21) if the determined vehicle position within the digital map corresponds to the data of the driving assistance function (11).

3. Method according to Claim 1 or 2, wherein the validation of the up-to-dateness of the digital map has a negative outcome (22) if a deviation between the determined vehicle position within the digital map and the data of the driving assistance function (11) is ascertained.

4. Method according to Claim 3, wherein after a deviation between the determined vehicle position within the digital map and the data of the driving assistance function (11) has been ascertained, an external server unit (14) is notified via a communication connection (12).

5. Method according to Claim 3 or 4, wherein after a deviation between the determined vehicle position within the digital map and the data of the driving assistance function (11) has been ascertained, map updating and/or remapping are/is initiated.

6. Method according to any of Claims 3 to 5, wherein the deviation between the determined vehicle position within the digital map and the data of the driving assistance function (11) is assessed and/or categorized.

7. Method according to any of Claims 3 to 6, wherein the ascertained deviation is stored in a memory (8) connectable to the control unit (6).

8. Control unit (6), wherein the control unit (6) is designed to carry out the method (2) according to any of Claims 1 to 7.

9. Computer program comprising instructions which, when the computer program is executed by a computer or a control unit (6), cause same to carry out the method according to any of Claims 1 to 7.

10. Machine-readable storage medium (8) on which the computer program according to Claim 9 is stored.

## Revendications

1. Procédé (2) permettant de valider l'actualité d'au moins une carte numérique, en particulier par un appareil de commande (6), dans lequel
- ladite au moins une carte numérique est reçue ou interrogée (17),
- des données de mesure concernant un environnement de véhicule (U) sont reçues (13) d'un système de capteurs de véhicule,
- des points de repère sont extraits des données de mesure et sont détectés à l'intérieur de ladite au moins une carte numérique,
- une position de véhicule à l'intérieur de ladite au moins une carte numérique est établie (18) sur la base des points de repère détectés à l'intérieur de l'environnement de véhicule (U),
- des données d'une fonction d'assistance à la conduite (11) sont reçues (19), les données de la fonction d'assistance au conducteur (11) étant des résultats de la fonction d'assistance au conducteur (11), un système d'alerte de franchissement de ligne étant utilisé comme fonction d'assistance au conducteur (11),
- une comparaison entre la position de véhicule établie à l'intérieur de ladite au moins une carte numérique et les résultats de la fonction d'assistance à la conduite (11) est effectuée (20) pour valider l'actualité de ladite au moins une carte numérique,
**caractérisé en ce qu'**une validation positive de l'actualité de la carte est établie si à la fois la position de véhicule sur la carte numérique configurée sous forme de carte de localisation et les résultats de la fonction d'assistance au conducteur établissent de façon concordante une position praticable.

2. Procédé selon la revendication 1, dans lequel l'actualité de la carte numérique est confirmée (21) si la position de véhicule établie à l'intérieur de la carte numérique concorde avec les données de la fonction d'assistance à la conduite (11).

3. Procédé selon la revendication 1 ou 2, dans lequel la validation de l'actualité de la carte numérique est négative (22) si un écart entre la position de véhicule établie à l'intérieur de la carte numérique et les données de la fonction d'assistance à la conduite (11) est constaté.

4. Procédé selon la revendication 3, dans lequel après qu'un écart a été constaté entre la position de véhicule établie à l'intérieur de la carte numérique et les données de la fonction d'assistance à la conduite (11), une unité de serveur externe (14) est informée par une liaison de communication (12).

5. Procédé selon la revendication 3 ou 4, dans lequel après qu'un écart a été constaté entre la position de véhicule établie à l'intérieur de la carte numérique et les données de la fonction d'assistance à la conduite (11), une mise à jour de la carte et/ou une nouvelle cartographie sont initiées.

6. Procédé selon l'une quelconque des revendications 3 à 5, dans lequel l'écart entre la position de véhicule établie à l'intérieur de la carte numérique et les données de la fonction d'assistance à la conduite (11) est évalué et/ou catégorisé.

7. Procédé selon l'une quelconque des revendications 3 à 6, dans lequel l'écart constaté est mémorisé dans une mémoire (8) pouvant être reliée à l'appareil de commande (6).

8. Appareil de commande (6), l'appareil de commande (6) étant conçu pour exécuter le procédé (2) selon l'une quelconque des revendications 1 à 7.

9. Programme informatique comprenant des instructions qui, lorsque le programme informatique est exécuté par un ordinateur ou un appareil de commande (6), font que celui-ci exécute le procédé selon l'une quelconque des revendications 1 à 7.

10. Support de stockage lisible par machine (8), sur lequel est stocké le programme informatique selon la revendication 9.
